# EUROPEAN PATENT APPLICATION

(11) **EP 4 390 192 A1**
(43) Date of publication of application: **26.06.2024**
(21) Application number: 22216295.0
(22) Date of filing: 23.12.2022
(51) Int. Cl.: F16K 11/22, F16K 27/00, F15B 13/08, F16L 37/098, B60N 2/90

(54) **VEHICLE SEAT CUSHION INFLATION SYSTEM**

(71) Applicant: FICO CABLES LDA, 4470-263 Vermoim-Maia (PT)
(72) Inventor: DE CASTRO FARIA, Manuel Antonio, 4470-263 Vermoim-Maia (PT); RODRIGUES ARCOVERDE, Gabriel Augusto, 4470-263 Vermoim-Maia (PT)
(74) Representative: Bardehle Pagenberg Partnerschaft mbB Patentanwälte Rechtsanwälte

(57) **Abstract**

Vehicle seat cushion inflation system 1 for selectively inflating a set of pneumatic seat cushions 104 within a vehicle seat 100, comprising a housing 10; a printed circuit board 20, arranged within the housing 10; a set of electrically controlled pneumatic valves 30, at least electrically connected to the printed circuit board 20 and having inlet ports 32 and outlet ports 34; a pneumatic manifold 40, pneumatically connecting the inlet ports 32 of the pneumatic valves 30; wherein the manifold 40 comprises a set of valve connectors 46 for connection with the inlet ports 32 of the valves 30. Further a method for assembling a vehicle seat cushion inflation system 1 is claimed.

## Description

### 1. Technical field

The invention relates to a vehicle seat cushion inflation system particularly for providing compressed air to an air bladder of an automotive comfort system within an automotive seat. Such comfort systems are used for shaping the seat cushion or backrest of an automotive seat according to passengers needs or for providing a massage function.

### 2. Prior art

Automotive comfort systems with air bladders for shaping the seat cushion or the backrest of an automotive seat are known. Presently such comfort systems comprise motor actuated air pumps that supply compressed air to fill air bladders with the desired amount of air. Further, the filling and release of air of such air bladders is usually controlled by solenoid air valves.

If more than one air bladder is used usually the compressed air from one common pump is distributed to a set of solenoid air valves that control the air flow to a corresponding set of air bladders. The air distribution is usually done by a manifold that is individually provided for the respective system or made by standard tubing and tubing connectors.

The prior art document US 10 711 911 B1 discloses a pressure distributor for a motor vehicle, in particular for pneumatic actuators in seats. The pressure distributor distributes compressed air between a pressure generator and a plurality of electrically controllable valves via a common air inlet line. The common air inlet line is connected as a separate component via a releasable connection to the plurality of valves.

However, there is still a need to further improve automotive comfort systems comprising air bladders.

### 3. Summary of the invention

The above-mentioned problem is solved by a vehicle seat cushion inflation system according to claim 1 and by a method for assembling a seat cushion inflation system for vehicles according to claim 14.

Particularly, the above-mentioned problem is solved by a vehicle seat cushion inflation system for selectively inflating a set of pneumatic seat cushions within a vehicle seat, comprising a housing; a printed circuit board, arranged within the housing; a set of electrically controlled pneumatic valves, connected at least electrically to the printed circuit board and having inlet ports and outlet ports; a pneumatic manifold, pneumatically connecting the inlet ports of the pneumatic valves; wherein the manifold comprises a set of valve connectors for connection with the inlet ports of the valves.

The vehicle seat cushion inflation system integrates the air distribution components of a pneumatic seat cushion vehicle seat in one integral part. The set of electrically controlled pneumatic valves is favorably at least electrically connected to a printed circuit board (PCB) that provides control signals to the set of pneumatic valves and preferably also mechanically mounts the set of pneumatic valves. Mechanically, the set of electrically controlled pneumatic valves and/or the manifold can preferably be connected to the printed circuit board or directly to the housing. The housing protects the system and preferably serves for mounting the system within the vehicle seat. The pneumatic manifold provides compressed air provided by a source of compressed air, like an electrical air pump, to the set of pneumatic valves.

By the set of valve connectors, the valves can be directly and easily connected to the manifold.

Preferably, the manifold further comprises an inlet connector and an outlet connector for a direct connection of the manifold to a further manifold.

Since the manifold preferably comprises an inlet connector and an outlet connector, which allow a direct connection of the manifold to a further manifold, the vehicle seat cushion inflation system is modular and allows support to a different number of pneumatic valves and related air cushions. Therefore, the manifold can be connected to a further manifold of the same type to increase the number of connected pneumatic valves. Two or more identical or similar manifolds can be easily connected in series by connecting the outlet connector of one manifold to the inlet connector of another manifold. This provides easy scalability of the system and decreases overall production costs. Further, a pneumatic pump or other source of compressed air can be connected to the inlet connector or the outlet connector of the manifold. Thus, a series of manifolds can be provided with compressed air from one single source.

Preferably, the manifold is a single-piece injection molded plastics part. Since only one type of manifold needs to be produced for different numbers of pneumatic valves to be connected the manifold can be efficiently produced as a single-piece injection molded plastics part. The initial costs for a rather costly injection mold pays-off when using a large number of identical manifolds within systems of different numbers of pneumatic valves. Further, assembly of the system is facilitated with a manifold that is a single-piece part, since the manifold does not need to be assembled from a plurality of components.

Preferably, the inlet connector is of a female type and the outlet connector is of a corresponding male type, or the inlet connector is of a male type and the outlet connector is of a corresponding female type. Thus, two or more manifolds can be directly connected in series.

Preferably, the valve connectors preferably have the same shape as the outlet connector or the inlet connector. Thus, the connectors, which distribute air to the valves and to a further manifold are designed the same. This eases connection as the assembly worker deals with one type of pneumatic connection, which avoids compatibility issues.

Preferably, the manifold comprises 2, 3, 4, 5, 6, 7 or 8 valve connectors.

Preferably, the manifold comprises an essentially straight main tube. Preferably, the main tube extends along the main axis of the manifold and preferably from the inlet connector to the outlet connector. A straight main tube also facilitates production by injection molding of the manifold as a straight molding core can be used.

Preferably, the valve connectors are arranged essentially perpendicularly to the main tube.

Preferably, at least two of the valve connectors are arranged along the main tube at different longitudinal locations and pointing to the same direction.

Preferably, at least two of the valve connectors are arranged along the main tube at the same longitudinal location and pointing to an 180° opposite direction.

Preferably, the valve connectors and/or the outlet connector are of a female type and comprise at least one latching means. In an alternative, the valve connectors and/or the inlet connector are of a female type and comprise at least one latching means. The latching means mechanically secures the connection of the connected parts, for example the connection of the manifold to another manifold or to a valve or to a closing cap. Further, it facilitates the mounting process as no tools are needed to secure such a latching connection.

Preferably, the manifold further comprises integrally injection molded attachment means for connection of the manifold to the printed circuit board or to the housing. By means of the attachment means the manifold can be easily mechanically attached directly to the PCB or to the housing what increases mechanical stability.

Preferably, the attachment means has a pin, which extends through a mounting hole within the printed circuit board. Such pin is inserted into the mounting holes and then can be thermally welded from the backside of the PCB to fix the manifold. Thus, no additional mounting means are needed.

Preferably, the attachment means has a hole, which allows a screw mounting or rivet mounting of the manifold with the printed circuit board or to the housing. In another embodiment, the manifold can be mounted via screws or rivets for example directly mounted to the PCB or to the housing.

Preferably, the vehicle seat cushion inflation system further comprising at least one closing cap for pneumatically closing a non-used valve connector or a non-used outlet connector. Thus, the same manifold can be used for different numbers of pneumatic valves.

Preferably, the closing cap, and/or either the inlet ports of the valves or the valve connectors of the manifold and/or the either the inlet connector of the manifold or the outlet connector of the manifold comprises a notch at the perimeter for latching with a latching means, wherein the notch has a tapered section that interrupts the notch for disengaging with the latching means by rotation, preferably by rotation around 90°. Thereby, the preferably two tapered sections push the latching means out of engagement with the notch and the connection between the two connected elements (two manifolds, manifold - valve, manifold - closing cap, manifold - inlet adapter) can be disengaged. Preferably, the closing cap comprises a socket, for rotating the closing cap by a socket screw key, for example, a hexagon socket for a hexagon socket screw key (e.g. Allen or Inbus key).

Preferably, the vehicle seat cushion inflation system further comprises O-rings, for pneumatically sealing the connections between manifold and valves and/or between two manifolds and/or between manifold and closing cap and/o between manifold and inlet adapter. The O-rings provide an air-tight seal at the connections. The O-rings are preferably placed within the female connectors of the manifold or inlet adaptor and are axially compressed when latching the respective elements together by latching means.

The above-mentioned object is also solved by a method for assembling a vehicle seat cushion inflation system, the method comprising at least the following steps in the following order:
a. attaching a set of electrically controlled pneumatic valves to a pneumatic manifold, to provide a valves and manifold subassembly;
b. attaching at least electrically the valves and manifold subassembly to a printed circuit board, to provide a valves, manifold and printed circuit board subassembly; and
c. attaching valves, manifold and printed circuit board subassembly to a housing.

This method allows a fast, easy and secure assembly of the seat cushion inflation system.

Preferably, the step of attaching valves, manifold and printed circuit board subassembly to a housing comprises fixing the printed circuit board to the housing. Thus, the printed circuit board serves as a structural element of the system.

Preferably the step of attaching valves, manifold and printed circuit board subassembly to a housing comprises fixing the valves to the housing. As an alternative or additional to fixing the printed circuit board to the housing also the valves can be directly fixed to the housing. This improves mechanical stability and vibration resistance of the system.

### 4. Short description of the drawings

In the following, preferred embodiments of the invention are disclosed by reference to the accompanying figures, in which shows:
- Fig. 1:: a schematic sectional view of a vehicle seat with pneumatic seat cushions and a vehicle seat cushion inflation system;
- Fig. 2:: a pneumatic schematics of a vehicle seat cushion inflation system together with pneumatic seat cushions and an air pump;
- Fig. 3:: a three-dimensional view of a preferred embodiment of a vehicle seat cushion inflation system without lid of the housing;
- Fig. 4:: a three-dimensional view of a further preferred embodiment of a vehicle seat cushion inflation system without the housing;
- Fig. 5:: a three-dimensional view of a first preferred embodiment of a manifold;
- Fig. 6:: a three-dimensional view of the manifold of Fig. 4 seen from the other side;
- Fig. 7:: a three-dimensional view of a second preferred embodiment of a manifold;
- Fig. 8:: a three-dimensional detail view of a connection between two manifolds;
- Fig. 9:: a partial sectional view of a vehicle seat cushion inflation system without the housing;
- Fig. 10:: a three-dimensional detail view of a vehicle seat cushion inflation system during assembly of a closing cap to a manifold;
- Fig. 11A:: a three-dimensional view of an embodiment of a valve;
- Fig. 11B:: a three-dimensional view of the valve of Fig. 11A seen from the other side; and
- Fig. 12A and 12B:: a three-dimensional detail view of a vehicle seat cushion inflation system during assembly of an adapter to a manifold.

### 5. Description of preferred embodiments

In the following preferred embodiments of the invention are described with respect to the figures.

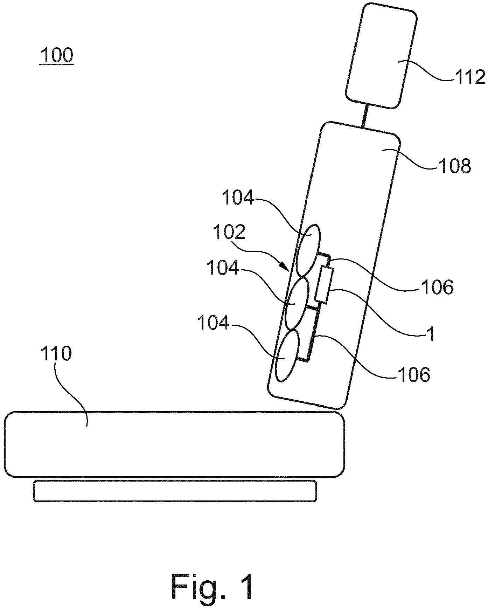

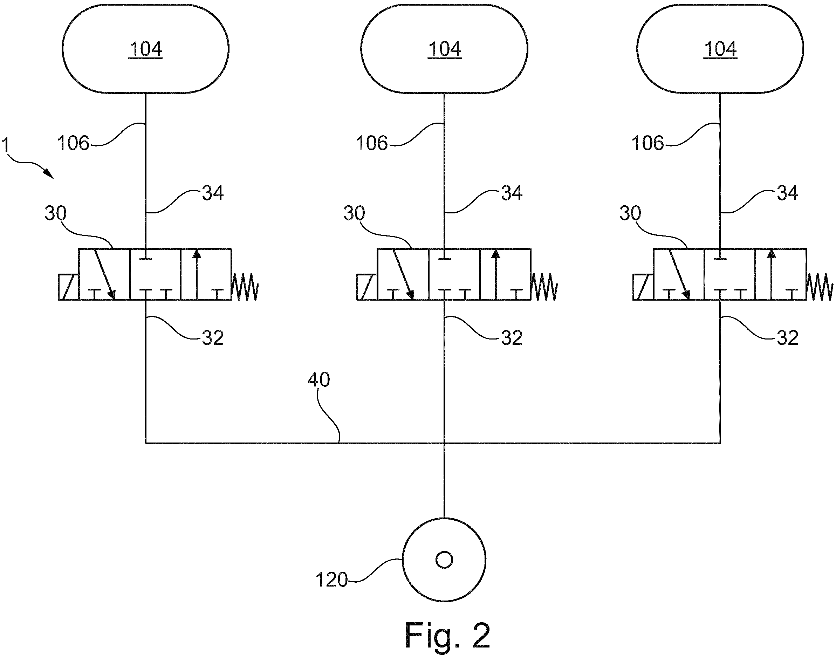

Fig. 1 shows schematically a vehicle seat 100 with an automotive comfort system 102 comprising pneumatic seat cushions 104 and a vehicle seat cushion inflation system 1 integrated into the backrest 108 of the seat 100. By means of the pneumatic seat cushions 104 the passenger can adapt the shape or contour of the backrest 108 according to the personal comfort. Thereby, the pneumatic seat cushions 104, which are air bladders, are selectively inflated with compressed air from an electric air pump 120 (see Fig. 2). In some embodiments also massage functions or the like can be realized by the vehicle seat cushion inflation system 1 with pneumatic seat cushions 104. Further, pneumatic air cushions 104 can also be integrated into the seat portion 110 or the headrest 112 of the seat.

The vehicle seat cushion inflation system 1 controls and distributes the compressed air selectively from the air pump 120 to the pneumatic seat cushions 104 during inflation, selectively maintains the air within the pneumatic seat cushions 104, and also selectively controls release of air from the pneumatic seat cushions 104 during deflation.

Fig. 2 shows a pneumatics diagram of a vehicle seat cushion inflation system 1 with three pneumatic seat cushions 104 and a common electric air pump 120. The number of pneumatic seat cushions 104 and corresponding electrically controlled pneumatic valves 30 is only exemplary and can vary according to the needs of the customer and seat manufacturer.

The vehicle seat cushion inflation system 1 has the following functionality: The air pump 120 takes in air from the ambient, compresses it to some extend and provides this compressed air via a pneumatic manifold 40 to the pneumatic valves 30. One or more selected ones of the pneumatic valves 30 open electrically and provide the compressed air to a respective pneumatic seat cushion 104 via a respective air conduit 106 between the pneumatic valve 30 and the corresponding pneumatic seat cushion 104. If the respective pneumatic valve 30 closes, the air pressure is maintained within the respective pneumatic seat cushions 104. Further, the vehicle seat cushion inflation system 1 is able to release the air in a controlled manner from the pneumatic seat cushions 104 to the ambient by opening a selected one the pneumatic valves 30.

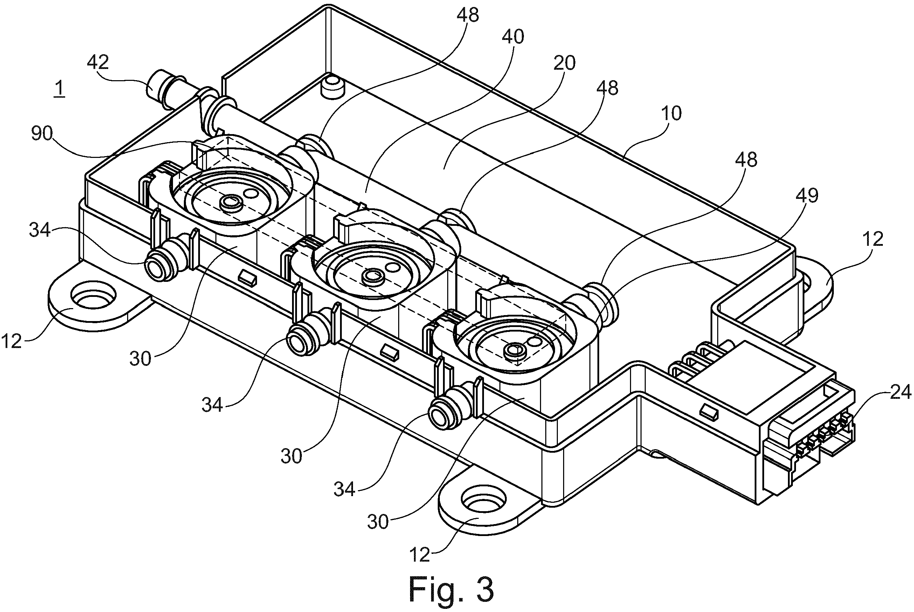

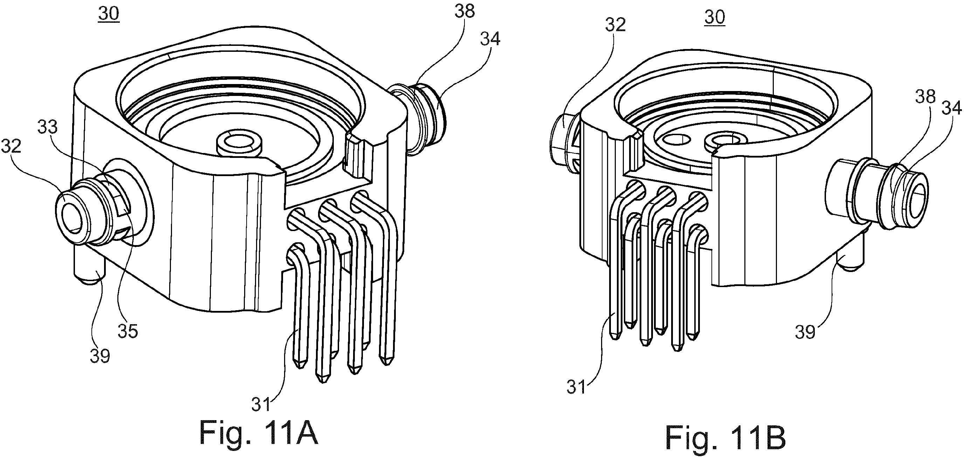

The vehicle seat cushion inflation system 1 in this embodiment comprises three electrically controlled 3/3-way pneumatic valves 30 each having an inlet port 32 and an outlet port 34. The pneumatic valves 30 can be electrically actuated by solenoids or piezo actuators. In the shown exemplary embodiment of Figs. 3, 4, 9 and 11 the pneumatic valves are piezo actuated. For the electric actuation the pneumatic valves 30 comprise electric contacts 31 (see Figs. 11A, 11B) that are connected to electric lines (not shown) on the printed circuit board 20.

The 3/3-way pneumatic valves 30 comprises three states that can be electrically selected:
(1) By electric actuation the pneumatic valves 30 can be switched to a "closed" or "retaining" state (the state selected in Fig. 2). In this closed or retaining state the inlet port 32 and the outlet port of the valve 30 are closed. Thus, compressed air withing the pneumatic seat cushion 104 is retained and the connection to the manifold 40 is also closed such that no air is released.
(2) By different electric actuation (e.g. different electric polarity) the pneumatic valve 30 can be switched to an "inflation" state (in Fig. 2 the state at the right to the closed state). In this inflation state the inlet port 32 and the outlet port 34 are connected with each other. Thus, compressed air from the air pump 120 can flow to the corresponding pneumatic seat cushion 104 for inflation thereof.
(3) Without electric actuation the pneumatic valve 30 switches to a "deflation" state (in Fig. 2 the state at the left to the closed state). In this deflation state the outlet port 34 is connected to the ambient to release air out of corresponding pneumatic seat cushion 104 for deflation thereof. Further, the inlet port 32 is closed such that no air is released from the manifold 40.

In an alternative embodiment the actuation of the "retaining" state (1) and the "deflation" state (3) are exchanged. Thus, without electric actuation the pneumatic valve 30 switches to the "retaining" state, in which the air is retained within the seat cushion 104, and by particular electric actuation the pneumatic valves 30 can be switched to a "deflation" state, in which the air is retained within the seat cushion 104 is releases to the ambient.

Other actuation schemes can be used by using different pneumatic 3/3-way valves 30.

Other valves or valve combinations, which provide the same or similar functionality can also be used instead of the shown 3/3-way valves, for example 2/2-way valves or 3/2-way valves.

Fig. 3 shows a first embodiment of a vehicle seat cushion inflation system 1. This vehicle seat cushion inflation system 1 comprises a housing 10, a printed circuit board 20, a set of electrically controlled pneumatic valves 30 and a pneumatic manifold 40.

The housing 10 surrounds and protects the internal components of system 1. Further it comprises attachment means 12, like the shown lugs 12, for mounting the system 1 within the vehicle seat 100. The housing 10 further comprises a lid (not shown) that substantially closes the housing 10.

The printed circuit board 20 is connected to the interior of the housing 10. It serves on the one hand for mechanically mounting the valves 30 and the manifold 40. On the other hand, it serves for the electric actuation of the electrically controlled pneumatic valves 30. The printed circuit board comprises an electrical connector 24 for electrically connecting the printed circuit board 20 and vehicle seat cushion inflation system 1 to an electrical board net of a vehicle (not shown).

The set of electrically controlled pneumatic valves 30 comprises three valves 30 for the actuation of three pneumatic seat cushions 104. The pneumatic seat cushions 104 are connected to the outlet ports 34 by pneumatic conduits 106. In the shown embodiment the electrically controlled pneumatic valves 30 are 3/3-way piezo valves which comprise piezo elements (not shown) for switching between the three states explained above. The pneumatic valves 30 are mechanically and electrically connected to the printed circuit board 20. Figs. 11A and 11B show the pneumatic valves 30 in more detail. For an electric connection with the printed circuit board 20 the valves 30 comprise electric contacts 31. For a mechanic connection with the printed circuit board 20 the valves 30 comprise pins 39 that extend through holes in the printed circuit board 20. The pins 39 can be thermally welded from the other side of the printed circuit board 20 to fix the valves 30 thereon.

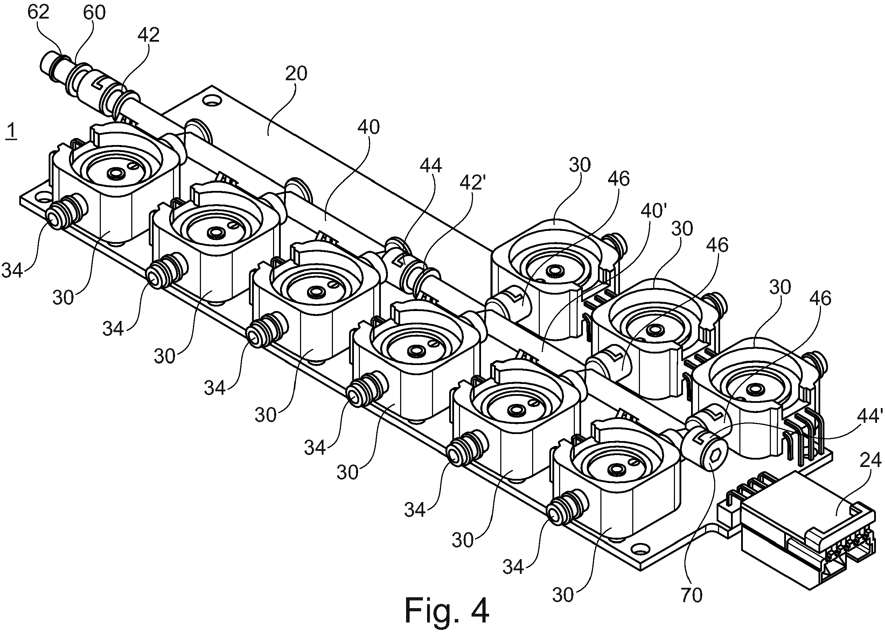

The pneumatic manifold 40 is a single-piece injection molded plastics part that pneumatically connects the inlet ports 32 of the valves 30 with each other and with a source of compressed air, like air pump 120. Thus, the manifold 40 comprises a set of valve connectors 46 for connection with the inlet ports 32 of the valves 30. Further, the manifold 40 comprises an inlet connector 42 for connection to the air pump 120 or a conduit thereto. In addition, the manifold 40 comprises an outlet connector 44 for a direct connection of the manifold 40 to a further manifold 40' (not shown in Fig. 3). Thus, by means of the outlet connector 44 and the inlet connector 42 a series connection of two or more manifolds can be provided as shown in Fig. 4. Thus, by means of the manifold 40 the vehicle seat cushion inflation system 1 is scalable to different numbers of pneumatic valves 30 or pneumatic seat cushions 104.

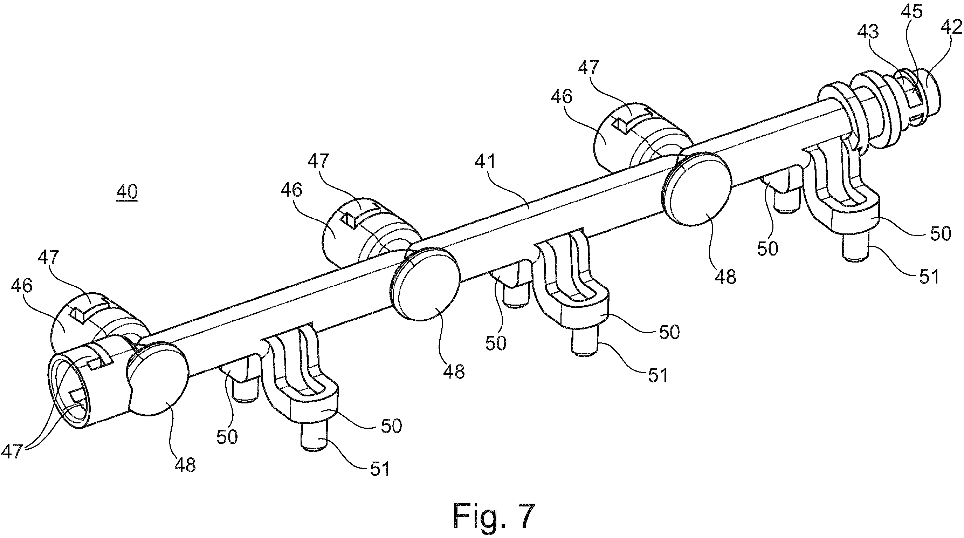

The manifold 40 further comprises closed valve connectors 48 which are air-tight placeholders for further connections to valves 30 but are not used for a connection to a valve. The closed valve connectors 48 can be made during injection-molding of the manifold 40 or may be produced by thermo-welding after the injection-molding. Thus, the closed connectors 48 are integral elements of the manifold 40. Fig. 7 shows the manifold 40 with closed connectors 48 in more detail.

As shown in Fig. 3, the manifold 40 can comprise a closed outlet connector 49 if it is not intended to connect the manifold 40 to a further manifold. The closed outlet connector 49 can be made during injection-molding of the manifold 40 or may be produced by thermo-welding after the injection-molding. Thus, the closed outlet connector49 is an integral element of the manifold 40.

Alternatively to closed valve connectors 48 or a closed outlet connector 49, the vehicle seat cushion inflation system 1 may comprises closing caps 70, as shown in more detail Figs. 4, 9 and 10, which selectively air-tight close not used valve connectors 46 and/or the outlet connector 44 of the manifold.

Fig. 3 further shows a foam block 90 that is arranged over the valves 30 within the housing 10. The foam block dampens noise of released air when a valve 30 is deflating a corresponding seat cushion 102.

Fig. 4 shows a further embodiment of a vehicle seat cushion inflation system 1 having set of nine electrically controlled pneumatic valves 30. Three of the valves 30 are connected to a first manifold 40 and six of the valves 30 are connected to a second manifold 40'. The second manifold 40' by its inlet port 42' is directly connected to the outlet port 44 of the first manifold 40. Thus, the first manifold 40 supplies compressed air to the second manifold 40'. The outlet port 44' of the second manifold 40' is closed by a closing cap 40 as no further manifold should be connected thereto. However, it is envisaged to connect three, four or even more manifolds 40 in series if more valves 30 are present in the vehicle seat 100.

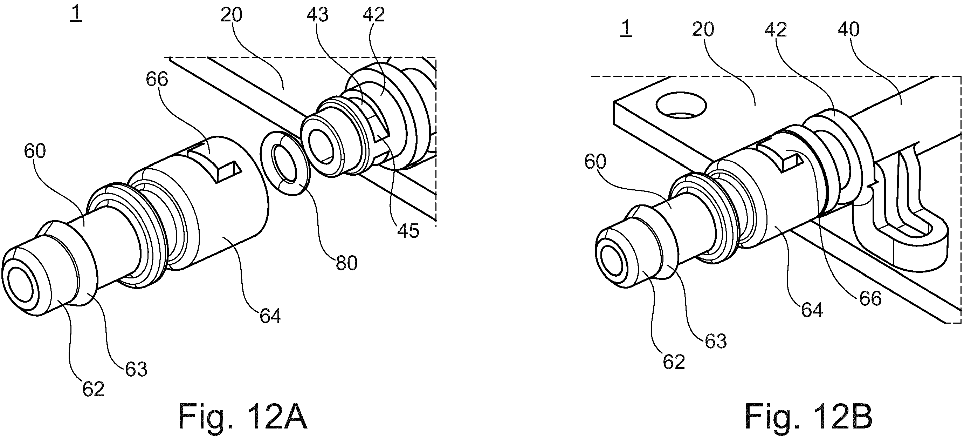

The inlet connector 42 of the first manifold 40 is connected to an inlet adapter 60 for a connection to the air pump 120 by a conventional plastic tube. The inlet adapter 60 is shown in more detail in Figs. 12A and 12B and is connected to the inlet connector 42 by an outlet port 64 that is preferably designed like a valve connector 46 and/or an outlet connector 44 of a manifold 40. For an improved connection to a plastic tube the inlet adapter 60 comprises an inlet port 62 with a latching rim 63. Thus, by the inlet adapter 60 the first of a series of manifolds 40 can be made to be a connection point to the air source. The inlet adapter 60 further comprises latching means 66 which latch with a corresponding notch of the inlet connector 42.

The outlet ports 34 of the valves 30 also allow a connection to the pneumatic seat cushions 104 by a conventional plastic tube as pneumatic conduit 106. Similarly to the inlet adapter 60, for an improved connection to a plastic tube the outlet ports 34 comprises latching rims 38 (see Fig. 11A and 11B).

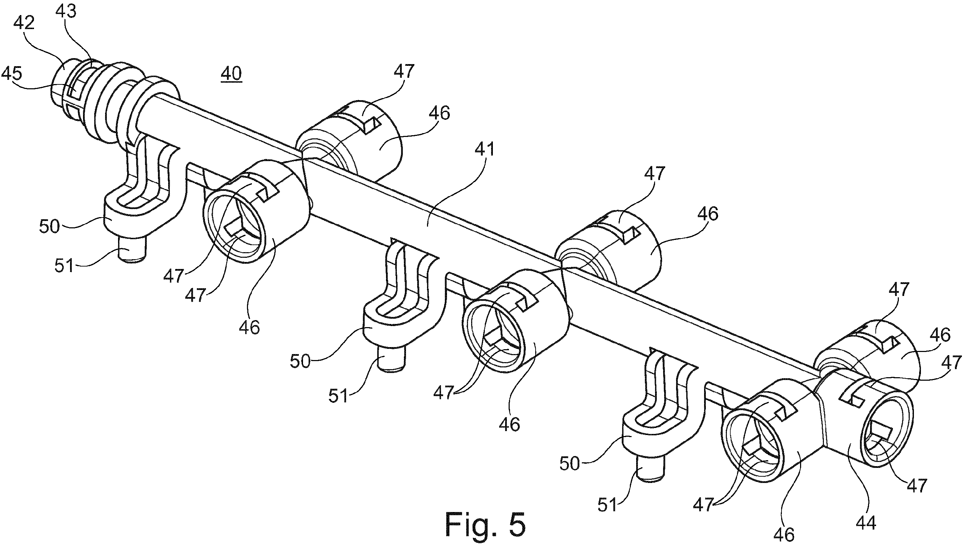

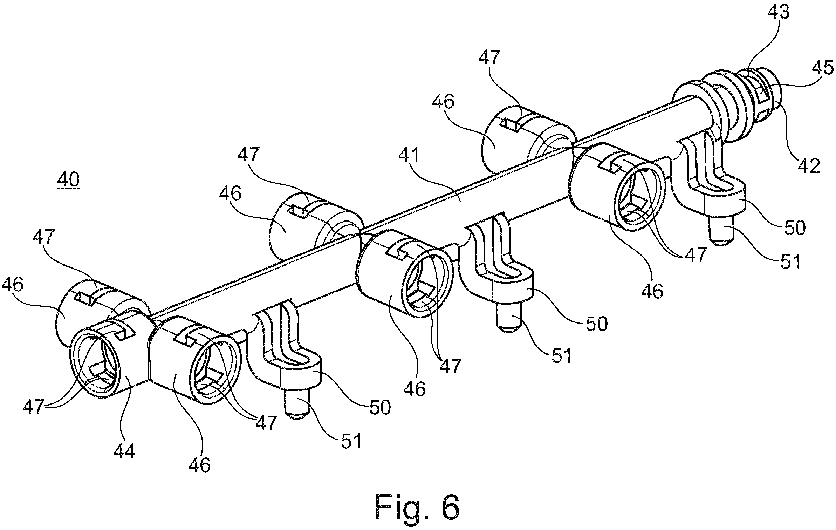

The Figs. 5 and 6 show a manifold 40 in more detail. The inlet connector 42 is of a female type and the outlet connector 44 is of a corresponding male type. The valve connectors 46 have the same shape as the outlet connector 44 or the inlet connector 42. Thus, if the valve connectors 46 have the same shape as the outlet connector 44, the same closing cap 70 can be used to close the outlet connector 44 or the valve connectors. 46. Further, it is possible to connect a further manifold 40 to one of the valve connectors 46, which then becomes an outlet connector 44 as well.

As shown in Fig. 5 the manifold 40 comprises six valve connectors 46. However, in other embodiments other numbers of valve connectors 46, like 2, 3, 4, 5, 6, 7 or 8 valve connectors 46 are also preferred.

The manifold 40 comprises an essentially straight main tube 41 wherein the valve connectors 46 are arranged essentially perpendicularly to the main tube 41. Thus, the valves 30 can be arranged in one or two rows at the sides of the manifold 40 in a space saving manner.

Preferably, at least two of the valve connectors 46 are arranged along the main tube 41 at different longitudinal locations and pointing to the same direction. Preferably, at least two of the valve connectors 46 are arranged along the main tube 41 at the same longitudinal location and pointing to an 180° opposite direction.

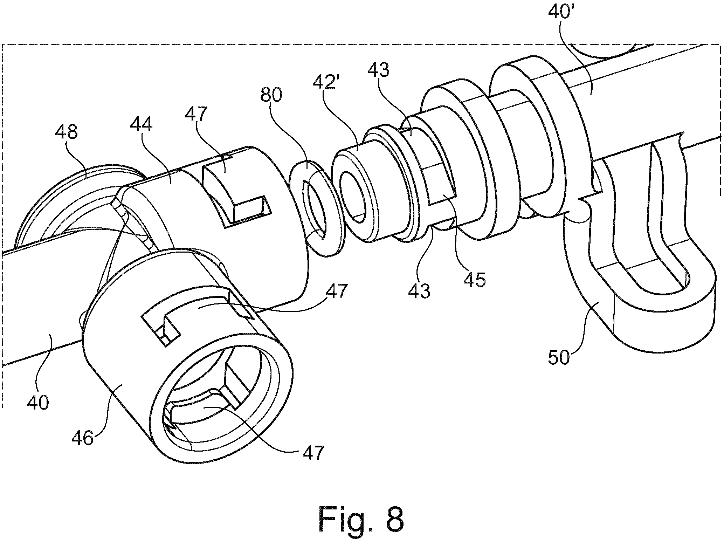

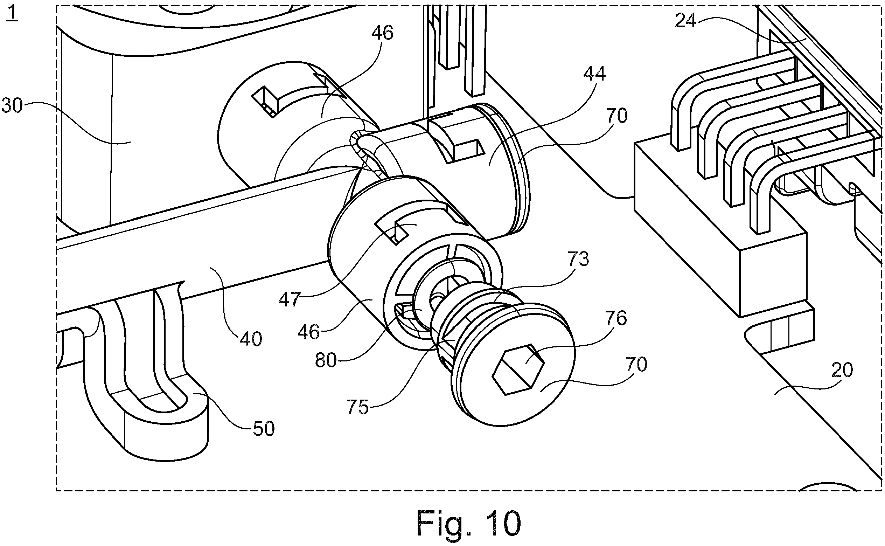

As shown in Figs. 5 and 6 and in more detail in Figs. 8 and 10 the valve connectors 46 and the outlet connector 44 and the outlet port 64 of the inlet adapter 60 comprise two latching means 47, 66 for securing the connection. The latching means 47, 66 are preferably arranged at opposite sides of the perimeter of the female valve connector 46 or female outlet connector 44 or female outlet port 66. The latching means 47, 66 latches with a corresponding notch 43 at the inlet connector 42 or with a corresponding notch 73 of the closing cap or with a corresponding notch 33 of an inlet port 32 of a valve 30 (see Fig. 11A). By the latching means 47, 66 the respective connection can be manually established by pushing the male connector element and the female connector element into each other. Thereby an O-ring 80 that acts as a seal is axially pushed together to seal the connection.

Figs. 5, 6, 7 and 8 show that the manifold 40 further comprises integrally injection molded attachment means 50 for connection of the manifold 40 to the printed circuit board 20 or to the housing 10 (connection not shown). In the shown embodiment the manifold comprises six attachment means 50, three attachment means 50 connected to each side of the main tube 41. The attachment means 50 have an essentially L-shape and place the manifold 40 at a distance to the printed circuit board 20. In the shown embodiment each attachment means has a pin 51, which extends through a mounting hole within the printed circuit board 20. After inserting the pins 51 into the mounting holes of the printed circuit board 20 the ends of the pins can be thermally welded to secure the manifold 40 to the printed circuit board 20.

In another embodiment (not shown) the wherein the attachment means 50 has a hole, which allow a screw mounting or rivet mounting of the manifold 40 with the printed circuit board 20.

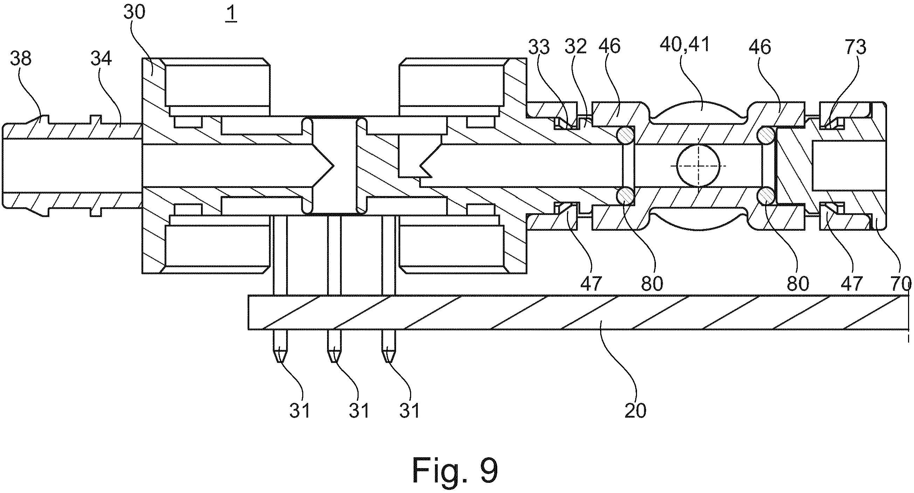

Fig. 8 shows a detailed view of the connection between to manifolds 40, 40'. The connection comprises an O-ring 80 of a rubber like material as sealant between the inlet connector 42 and the outlet connector 44. Such an O-ring 80 is also used in the connection between valve connector 46 and inlet port 32 of the valve 30 (see Fig. 9).

Further, such an O-ring 80 is used in the connection between valve connector 46 or outlet connector 44 and closing cap 70 (see Fig. 9 and Fig. 10). Finally, such an O-ring 80 is used in the connection between an inlet adapter 60 and inlet connector 42 (see Fig. 12A and 12B).

Preferably, the closing cap 70, and/or the inlet ports 32 of the valves 30 and/or the inlet connector 42 of the manifold 40 comprises a notch 33, 43, 73 at the perimeter of the respective male connector for latching with a latching means 47, 66 of the respective female outlet connector 44 and/or female valve connector 46 or female outlet port 64. The notch 33, 43, 73 has a tapered section 35 45, 75 that interrupts the notch for disengaging with the latching means by rotation, preferably by rotation around 90°. Thereby, the preferably four tapered sections 35 45, 75 of the notch 33, 43, 73 push the latching means 47, 66 out of engagement with the notch 33, 43, 73 such that the connection between the two connected elements (two manifolds, manifold - valve, manifold - closing cap, manifold - inlet adapter) can be disengaged simply be rotation the two connected elements by about 90°.

As shown in Fig. 10 in detail, the closing cap 70 comprises a hexagon socket 76, for rotating the closing cap by a hexagon socket screw key (e.g. Allen or Inbus key) for disengagement of the connection.

The special design of the manifold 40 provides a scalable system that easily allows for using different numbers of pneumatic valves 30 within the vehicle seat cushion inflation system 1. The system 1 can be particularly easy assembled a method which comprises at least the following steps in the following order:
a. attaching a set of electrically controlled pneumatic valves 30 to a pneumatic manifold 40, to provide a valves and manifold subassembly 30, 40;
b. attaching, at least electrically, the valves and manifold subassembly 30, 40 to a printed circuit board 20, to provide a valves, manifold and printed circuit board subassembly 20, 30, 40; and
c. attaching valves, manifold and printed circuit board subassembly 20, 30, 40 to a housing 10.

The step of attaching valves, manifold and printed circuit board subassembly 20, 30, 40 to a housing 10 can also comprise a fixing of the printed circuit board 20 to the housing 10. Thus, the valves 30 and manifold are mechanically fixed to the housing via the printed circuit board 20.

Alternatively or additionally the step of attaching valves, manifold and printed circuit board subassembly 20, 30, 40 to a housing 10 can also comprise a fixing of the valves 30 to the housing 10. Thus, the valves can also be directly fixed to the housing, what may improve the mechanical stability and vibration resistance of the system.

### List of reference signs:

- 1: vehicle seat cushion inflation system
- 10: housing
- 12: attachment means
- 20: printed circuit board
- 24: electrical connector
- 30: electrically controlled pneumatic valve
- 31: electrical contacts
- 32: inlet port
- 33: notch
- 34: outlet port
- 35: tapered section
- 38: latching rim
- 39: pin
- 40: pneumatic manifold
- 41: main tube
- 42: inlet connector
- 43: notch
- 44: outlet connector
- 45: tapered section
- 46: valve connector
- 47: latching means
- 48: closed valve connector
- 49: closed outlet connector
- 50: attachment means
- 51: pin
- 60: inlet adapter
- 62: inlet port
- 63: latching rim
- 64: outlet port
- 66: latching means
- 70: closing cap
- 73: notch
- 75: tapered section
- 76: hexagon socket
- 80: O-ring
- 90: foam block
- 100: vehicle seat
- 102: automotive comfort system
- 104: pneumatic seat cushion
- 106: pneumatic conduits
- 108: backrest
- 110: seat portion
- 112: headrest
- 120: air pump

## Claims

1. Vehicle seat cushion inflation system (1) for selectively inflating a set of pneumatic seat cushions (104) within a vehicle seat (100), comprising:
a. a housing (10);
b. a printed circuit board (20), arranged within the housing (10);
c. a set of electrically controlled pneumatic valves (30), at least electrically connected to the printed circuit board (20) and having inlet ports (32) and outlet ports (34);
d. a pneumatic manifold (40), pneumatically connecting the inlet ports (32) of the pneumatic valves (30); wherein
e. the manifold (40) comprises a set of valve connectors (46) for connection with the inlet ports (32) of the valves (30).

2. Vehicle seat cushion inflation system (1) according to claim 1, wherein the manifold (40) further comprises an inlet connector (42) and an outlet connector (44) for a direct connection of the manifold (40) to a further manifold (40').

3. Vehicle seat cushion inflation system (1) according to claim 2, wherein
the inlet connector (42) is of a female type and the outlet connector (44) is of a corresponding male type; or
the inlet connector (42) is of a male type and the outlet connector (44) is of a corresponding female type.

4. Vehicle seat cushion inflation system (1) according to one of the claims 2 to 3, wherein the valve connectors (46) have the same shape as the outlet connector (44) or the inlet connector (42).

5. Vehicle seat cushion inflation system (1) according to one of the claims 1 to 4, wherein the manifold (40) is a single-piece injection molded plastics part.

6. Vehicle seat cushion inflation system (1) according to one of the claims 1 to 5, wherein the manifold (40) comprises an essentially straight main tube (41).

7. Vehicle seat cushion inflation system (1) according to claim 6, wherein the valve connectors (46) are arranged essentially perpendicularly to the main tube (41).

8. Vehicle seat cushion inflation system (1) according to one of the claims 6 or 7, wherein at least two of the valve connectors (46) are arranged along the main tube (41) at different longitudinal locations and pointing to the same direction.

9. Vehicle seat cushion inflation system (1) according to one of the claims 6 to 8, wherein at least two of the valve connectors (46) are arranged along the main tube (41) at the same longitudinal location and pointing to an 180° opposite direction.

10. Vehicle seat cushion inflation system (1) according to claim 2, wherein either the valve connectors (46) and/or the outlet connector (44) are of a female type and comprise at least one latching means (47), or the valve connectors (46) and/or the inlet connector (44) are of a female type and comprise at least one latching means (47).

11. Vehicle seat cushion inflation system (1) according to one of the claims 1 to 10, wherein the manifold (40) further comprises integrally injection molded attachment means (50) for connection of the manifold (40) to the printed circuit board (20) or to the housing (10).

12. Vehicle seat cushion inflation system (1) according to one of the claims 1 to 11, further comprising at least one closing cap (70) for pneumatically closing a non-used valve connector (46) or a non-used outlet connector (44).

13. Vehicle seat cushion inflation system (1) according to claim 2, wherein a closing cap (70), and/or either the inlet ports (32) of the valves (30) or the valve connectors (46) of the manifold (40) and/or either the inlet connector (42) of the manifold (40) or the outlet connector (44) of the manifold (40) comprises a notch (33, 43, 73) at the perimeter for latching with a latching means (47, 66), wherein the notch (33, 43, 73) has a tapered section (35 45, 75) that interrupts the notch (33, 43, 73) for disengaging with the latching means (47, 66) by rotation.

14. Method for assembling a vehicle seat cushion inflation system (1), the method comprising at least the following steps in the following order:
a. attaching a set of electrically controlled pneumatic valves (30) to a pneumatic manifold (40), to provide a valves and manifold subassembly (30, 40);
b. attaching at least electrically the valves and manifold subassembly (30, 40) to a printed circuit board (20), to provide a valves, manifold and printed circuit board subassembly (20, 30, 40); and
c. attaching valves, manifold and printed circuit board subassembly (20, 30, 40) to a housing (10).

15. Method according to claim 14, wherein the step of attaching valves, manifold and printed circuit board subassembly (20, 30, 40) to a housing (10) comprises fixing the printed circuit board (20) to the housing (10) or fixing the valves (30) to the housing (10).
